# EUROPEAN PATENT APPLICATION

(11) **EP 3 708 530 A1**
(43) Date of publication of application: **16.09.2020**
(21) Application number: 20000071.9
(22) Date of filing: 18.02.2020
(51) Int. Cl.: B67D 1/08, A47J 31/44, G07F 13/02

(54) **METHOD FOR SELECTIVELY CONTROLLING A BEVERAGE DELIVERING SYSTEM**

(30) Priority: 11.03.2019 IT 201900003465
(71) Applicant: Sandenvendo Europe S.p.a., 15030 Casale Monferrato (AL) (IT)
(72) Inventor: Spagna, Danilo, I-15030 Coniolo (AL) (IT)
(74) Representative: Garavelli, Paolo

(57) **Abstract**

A method is described, for selectively controlling a beverage delivering system, such system comprising: a plurality of liquid containers (1), each comprising identifying and programming means (2) to code a single pre-set ID code and to store data of a programmed beverage; a liquid delivering apparatus (3) to communicate with each liquid container (1) and detect an approaching user; an inventory manager (4), such system comprising the following steps: displaying on a communication device a list of customized beverages associated with a single pre-set ID code; associating to each customized beverage a consumed liquid value (Lc1) during a certain time period; comparing the consumed liquid value (Lc1) with a pre-set threshold value (Lc); determining a consumable liquid value (Lc-Lc1).

## Description

The present invention refers to a method for selectively controlling a beverage delivering system.

In general, the present invention refers to a flow control, for example for controllino the total amount or the mixing ration of liquids to be delivered for determining the totale amount, comprising means for detecting the size of the vessel to be filled, an inventory or the management of stocks; or an apparatus or devices to deliver beverages about drawing the beverage being a single liquid, the beverage being stored in an intermediate container connected to a supply, the apparatus comprising means for automatically controlling the amount to be delivered depending on the timed opening of a valve; construction detailes related to the use of glasses or drinking glasses; remote control means, for example with electromagnetic signals; code reading means provided on pods or cartridges of ingredient; electronic control devices for apparatuses for preparing coffe or tea.

In particular, the present invention refers to social networking, formulation of queries through system suggestions, collection of market data, market analysis or market models, discounts or incentives, for example coupons, offers or upsales, TIC specifically adapted for managing the operation of medical apparatuses or devices for local operation, messages using information about a geographic position, messages within a social network.

The prior art is given by patent US-B1-9,334,150, which deals with containers for beverages with connected RFID tag. An activator of the RFID tag is placed in or near the dispenser of beverages to energize the RFID tag and to receive the most accurate information. Information stored in the containers of beverages are used to track them, record the types of consumed beverages with which the containers are filled, the number of times in which the containers are filled and the records of the types of beverages with which the containers are filled. The combination of different RFID tags is read and translated to identify a particular container for beverages. The identity of the container for beverages is inserted in an application in a mobile smart device to track, record and create selections of customized beverages associated with the identity of the container for beverages. The recordings of the customized beverages are sent to the smart mobile device of the user by an information system connected through wired or wireless communication to the dispensing system of the beverages.

Moreover, the prior art is given by patent US-B2-9,704,205, which deals with a smar cup/glass for determining what a suer is drinking and to provide a recommendation.

The smart cup can be implemented in any way, for example including a microchip which analyzes the colour of the beverage, the contents of sugar of the beverage and/or the ingredients of the beverage for determining the beverage. It is also possible to use a smart bowl/plate/vessel to analyze foods. On the lower part of the plate, these is a microchip which analyzes the contents inserted in the plate and information on the plate asre sent to a cloud device, to a smartphone and/or to other devices to be analyzes when a recommendation is provided. In soem embodiments, information about smart cup and plate are analyzed together or coupled in a database to provide recommendations.

The invention of patent US-B1-9,334,150 solves the problem of managing a system composed of a plurality of liquid containers with a RFID tag and a Quick Response QR code to code a single pre-set ID code, a liquid delivering apparatus adapted to communicate with a RFID tag to deliver at least one liquid, selectively control which liquids can be delivered and detect an approaching customer and an inventory manager connected to the liquid delivering system configured to store a plurality of unique pre-set ID codes corresponding to the containers.

Moreover, the invention of patent US-B1-9,334,150 solves the problem of creating a customized beverage through a host controller card equipped for displaying a system of menus to customize a beverage on a display screen and to allow delivering accurate amounts of liquids selected in the container associated with the pre-set ID of the container.

Moreover, the invention of patent US-B1-9,334,150 solves the problem of being able to communicate with a plurality of other servers of liquid dispensers in other positions to allow determining if the cup is new or re-used and to allow the user to select any previously created customized beverage or to create a new beverage.

Therefore, the recordings of the customized beverages sent to a smart mobile device can be a source of information to be used for further processing, for the user advantage and further use, However, this kind of processing of information is not the subject matter of patent US-B1-9,334,150.

Instead, a suggestion about processing information provided by a server of a beverage dispensing system is given by patent US-B2-9,704,205 B2 in which the problem of providing personal information and recommendations is solved through a smartphone connected to a smart cup.

Document WO-A2-2009/032929 discloses a method and a system according to the preamble of Claim 1.

Object of the present invention is solving the above prior art problems, by providing a method for controlling the delivery of beverages which is related to limits and constraints linked to the health of a user.

A further object is providing a method which allows stopping or limiting the delivery of beverages depending on a diet defined ad hoc for the user.

A further object is providing a method for controlling the delivery of beverages which allows a user to control the amount of delivered beverage by setting the threshold values on certain beverages.

The above and other objects and advantages of the invention, as will appear from the following description, are reached with a method for selectively controlling a beverage delivering system as clained in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention, as detailed in the enclosed claims.

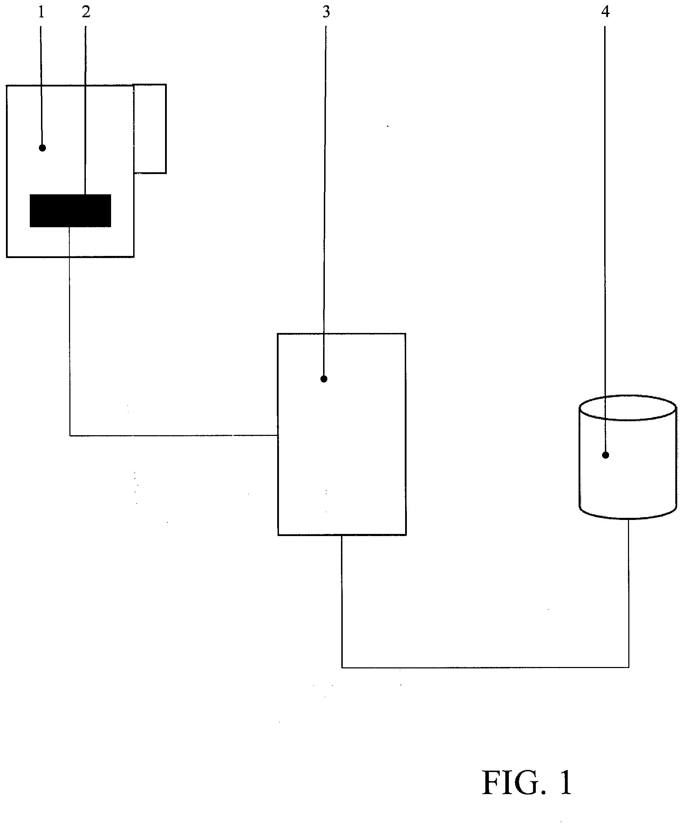

The present invention will be better described by some preferred embodiments thereof, provided as a non-limiting example, with reference to the single enclosed drawing, in which Figure 1 shows a functional diagram of an embodiment of the method for selectively controlling a beverage delivering system according to the present invention.

Therefore, with reference to Figure 1, it is possible to note that the present invention deals with a method for selectively controlling at least one beverage delivering system, such system comprising:
- a plurality of liquid containers (such as, for example, glasses, cups, etc.), each of such liquid containers 1 comprising identifying and programming means 2 to code a single pre-set ID code (identification code) and to store data of a programmed beverage;
- at least one liquid delivering apparatus 3 provided to communicate with each liquid container 1 to deliver the programmed beverage, selectively control which beverage can be delivered, detect an approaching user;
- at least one inventory manager 4 operatively connected to such at least one liquid delivering apparatus 3 and configured to store a plurality of unique pre-set ID codes corresponding with the liquid containers 1.

Advantageously, the method according to the present invention comprises one or more of the following steps:
- displaying on at least one communication device, such as, for example, smartphone, tablet, PC, a list of customized beverages associated with a single pre-set ID code;
- associating to each customized beverage a consumed liquid value Lc1 during a certain time period;
- comparing the consumed liquid value Lc1 with a pre-set threshold value Lc;
- determining a consumable liquid value Lc-Lc1.

In particular, the method according to the present invention can further comprise the step of updating the inventory manager 4 operatively connected to such at least one liquid delivering apparatus 3 transmitting the consumable liquid value (Lc-Lc1).

The invention is further related to a computer program comprising computer program code means, prefereably made as an application executable by at least one of such communication devices, adapted to execute one or more of the steps of the above-described method, when such program is run on processing means, for example of at least one of such communication devices.

## Claims

1. Method for selectively controlling a beverage delivering system, said method being related to limits and constraints linked to the health of a user, said system comprising:
- a plurality of liquid containers (1), each of said liquid containers (1) comprising identifying and programming means (2) to code a single pre-set ID code and to store data of a programmed beverage;
- at least one liquid delivering apparatus (3) provided to communicate with each of said liquid containers (1) to deliver the programmed beverage, selectively control which beverage can be delivered, detect an approaching user;
- at least one inventory manager (4) operatively connected to said at least one liquid delivering apparatus (3) and configured to store a plurality of unique pre-set ID codes corresponding to the liquid containers (1),
**characterized in that** said method comprises the following steps:
- displaying on at least one communication device a list of customized beverages associated with a single pre-set ID code;
- associating to each customized beverage a consumed liquid value (Lc1) during a certain time period;
- comparing said consumed liquid value (Lc1) with a pre-set threshold value (Lc);
- determining a consumable liquid value (Lc-Lc1); and
- stopping or limiting a delivery of said beverages depending on said consumable liquid value (Lc-Lc1) associated with a diet defined for each user.

2. Method according to the previous claim, **characterized in that** it comprises the step of updating said inventory manager (4) operatively connected to said at least one liquid delivering apparatus (3) transmitting said consumable liquid value (Lc-Lc1).

3. Computer program comprising computer program code means adapted to execute one or more of the steps of said method according to any one of the previous claims, when said program is run on processing means.
